# EUROPEAN PATENT APPLICATION

(11) **EP 4 554 282 A1**
(43) Date of publication of application: **14.05.2025**
(21) Application number: 24833171.2
(22) Date of filing: 24.07.2024
(51) Int. Cl.: H04W 36/00

(54) **COMMUNICATION CONTROL METHOD AND ELECTRONIC DEVICE**

(30) Priority: 26.09.2023 CN 202311247432
(71) Applicant: Honor Device Co., Ltd., Shenzhen, Guangdong 518040 (CN)
(72) Inventor: CHEN, Xiong, Shenzhen, Guangdong 518040 (CN)
(74) Representative: Isarpatent
(86) International application number: PCT/CN2024/107322
(87) International publication number: WO 2025/066492

(57) **Abstract**

Embodiments of this application relate to the field of communication technologies, and provide a communication control method and an electronic device, so that UE can more quickly re-camp on a network of a higher standard. The method may include: being disconnected from a first network, and establishing a connection to a first base station corresponding to a second network; sending a first attach request to the first base station, where a second network identifier corresponds to the second network; receiving a first attach response; sending a second attach request; receiving a second attach reject message; starting a first timer, where working duration of the first timer is first duration; and sending a third attach request, where the third attach request includes a first network identifier and a third registration identifier, the third registration identifier corresponds to a CS domain and a PS domain, and the first network identifier corresponds to the first network.

## Description

This application claims priority to Chinese Patent Application No. 202311247432.8, filed with the China National Intellectual Property Administration on September 26, 2023 and entitled "COMMUNICATION CONTROL METHOD AND ELECTRONIC DEVICE", which is incorporated herein by reference in its entirety.

### TECHNICAL FIELD

Embodiments of this application relate to the field of communication technologies, and in particular, to a communication control method and an electronic device.

### BACKGROUND

In a working process, user equipment (UE) may provide a wireless communication service for a user by changing networks of different standards on which the user equipment camps. The wireless communication service may include a voice call service, a data service, and the like.

For example, that the UE camps on an LTE network is used as an example. In some cases (for example, quality of the LTE network deteriorates), the UE may be disconnected from the LTE network.

Correspondingly, the UE may change to camp on a 3G or 2G network. That the UE changes to camp on the 3G network (for example, a WCDMA network) is used as an example. After establishing a radio access network connection to a base station corresponding to the WCDMA network, the UE may register in a circuit switched (Circuit Switched, CS) domain and a packet switched (Packet Switch, PS) domain with a core network device in the WCDMA network.

The CS domain may be used to support a voice call in the WCDMA network. The PS domain may be used to support a voice call and a data service in the WCDMA network.

After the UE successfully registers in the CS domain, if the UE cannot successfully register in the PS domain, the UE marks a current subscriber identity module (SIM) card as unavailable in the PS domain. Consequently, the UE camps on a network of a low standard (for example, the 3G network) for long time.

### SUMMARY

This application provides a communication control method and an electronic device, so that UE can more quickly re-camp on a network of a higher standard.

To achieve the foregoing technical objective, the following technical solutions are used in this application.

According to a first aspect, a communication control method is provided. The method is applied to an electronic device, the electronic device camps on a first network, and the method includes: being disconnected from the first network, and establishing a connection to a first base station, where the first base station corresponds to a second network, and a standard of the second network is different from that of the first network; sending a first attach request to the first base station, where the first attach request includes a second network identifier and a first registration identifier, the first registration identifier corresponds to a circuit switched CS domain, and the second network identifier corresponds to the second network; receiving a first attach response, where the first attach response includes information about AttachAccept; sending a second attach request, where the second attach request includes the second network identifier and a second registration identifier, and the second registration identifier corresponds to a packet switched PS domain; receiving a second attach reject message, where the second attach reject message includes information about AttachReject; starting a first timer, where working duration of the first timer is first duration; and sending a third attach request in the first duration in which the first timer works, where the third attach request includes a first network identifier and a third registration identifier, the third registration identifier corresponds to the CS domain and the PS domain, and the first network identifier corresponds to the first network.

In this way, after the UE is handed over from the first network to the second network, in a case in which registration in the CS domain succeeds and registration in the PS domain fails, the UE may also attempt to re-access to the first network in the first duration based on a configuration mechanism of the first timer. It may be understood that, in the second network, because the UE has completed registration in the CS domain, the UE may directly attempt to register in the CS domain and the PS domain in the first network through a base station corresponding to the second network. Therefore, a user needs to input an operation of turning on an airplane mode/turning off an airplane mode, so that the UE can autonomously and quickly re-camp on the first network.

Optionally, after the sending a third attach request, the method further includes: receiving a third attach response, where the third attach response includes information about AttachAccept. In this way, the UE can successfully re-camp on the first network in the first duration. Therefore, the UE may provide a corresponding voice call service and a corresponding data service on a basis that the UE has registered in the CS domain and the PS domain in the first network.

Optionally, after the receiving a first attach response, the method further includes: configuring to be registered in CS domain in the second network, so that a voice call is made through the second network.

Optionally, the method further includes: in the first duration in which the first timer works, keeping registered in the CS domain in the second network.

Therefore, during working of the first timer, the UE may still be registered in the CS domain in the second network, to implement normal working of the voice call service.

Optionally, after the receiving a second attach reject message, the method further includes: configuring a SIM state of a first SIM card as a first value, where the first value indicates that the PS domain of the first SIM card is unavailable, the first SIM card is installed in the electronic device, and the first SIM card is a SIM card used by the electronic device when the second attach request is sent. In a current solution, in a case in which the SIM state (SIM_STATE) of the first SIM card is configured as the first value (for example, 1), because the SIM card does not support the PS domain, the UE does not autonomously register in a network of a higher standard. Correspondingly, in this embodiment of this application, the UE may attempt to register in and access the first network by ignoring that the SIM_STATE is configured as 1 in the first duration in which the first timer works. Therefore, the UE can more quickly and autonomously camps on a first network of a higher standard.

Optionally, the method further includes: starting a first counter, where a value of the first counter is increased by 1 in a case in which the second attach reject message is received.

Optionally, in a case in which the value of the first counter is less than a first threshold, the method further includes: sending the second attach request again.

For example, the first threshold may be configured as 4. In this way, the UE can repeatedly attempt to register in the PS domain in the second network for four times, thereby avoiding a problem that registration in the PS domain in the second network fails due to a temporary cause such as a network abnormality.

Optionally, the starting a first timer includes: starting the first timer in a case in which the value of the first counter reaches the first threshold. In this example, in a case in which the UE still cannot complete registration in the PS domain through a plurality of attempts, the first timer may be started to attempt to register in and access the first network.

Optionally, a cause value of the second attach reject message includes information about #7; or a cause value of the second attach reject message includes information about #7 and information about GMM_Routing_Area_Update_Reject.

Optionally, after the starting a first timer, the method further includes: changing #7 in the cause value of the second attach reject message to #17. In this example, changing #7 to #17 may trigger a response of the UE to #17. For example, the UE may attempt to register in the PS domain in the second network for a plurality of times again, thereby improving a probability that registration in the PS domain in the second network succeeds is improved.

Optionally, the method further includes: starting a second counter, and sending the second attach request again, where hereafter each time a second attach reject message is received, a value of the second counter is increased by 1.

Optionally, in a case in which the value of the second counter is less than a second threshold, the method further includes: sending the second attach request again.

Optionally, the starting a first timer includes: starting the first timer in a case in which the value of the second counter reaches the second threshold.

For example, the second threshold may be configured as 5.

Optionally, the first attach request includes information about AttachRequest.

Optionally, the first registration identifier includes information about att_type=0, the second registration identifier includes information about att_type=1, and the third registration identifier includes information about att_type=2.

Optionally, the first timer is a T3302 timer, and the first duration is 12 minutes.

Optionally, the establishing a connection to a first base station includes: sending a first RRC connection request, receiving a first RRC connection message, and sending a first RRC connection complete message, where the first RRC connection request includes information about RRC Connection Setup Request, the first RRC connection message includes information about RRC Connection Setup, and the first RRC connection complete message includes information about RRC Connection Setup Complete. Therefore, after the UE is disconnected from the first network, the UE may implement the connection to the second network through an RRC connection procedure.

Optionally, before the sending a first RRC connection complete message, the method further includes: sending a second random access request message, and receiving a second random access response message; or sending the second random access request message, receiving the second random access response message, sending a second timing transmission message, and receiving a second contention configuration message, where the second random access request message includes information about a Msg 1, the second random access response message includes information about a Msg 2, the second timing transmission message includes information about a Msg 3, and the second contention configuration message includes information about a Msg 4. Therefore, the UE may implement the RRC connection to the second network through a random access procedure.

Optionally, the first network is an LTE network or an NR network, and the second network is a WCDMA network. Optionally, the first network may alternatively be a 6G network, and the second network may alternatively be another 3G network, another 2G network, or the like.

According to a second aspect, this application further provides an electronic device. The electronic device includes a memory and one or more processors. The memory is coupled to the processor. The memory is configured to store computer program code. The computer program code includes computer instructions. When the processor executes the computer instructions, the electronic device is enabled to perform the technical solution according to any one of the first aspect and the possible implementations of the first aspect.

According to a third aspect, this application further provides a chip system. The chip system is applied to an electronic device. The chip system may include one or more interface circuits and one or more processors. The interface circuit is interconnected to the processor through a line. The interface circuit is configured to receive a signal from a memory of the electronic device, and send the signal to the processor. The signal includes computer instructions stored in the memory. When the processor executes the computer instructions, the electronic device is enabled to perform the technical solution according to any one of the first aspect and the possible implementations of the first aspect.

According to a fourth aspect, this application further provides a computer-readable storage medium. The computer-readable storage medium includes computer instructions. When the computer instructions are run on an electronic device, the electronic device is enabled to perform the technical solution according to any one of the first aspect and the possible implementations of the first aspect.

According to a fifth aspect, this application further provides a computer program product. When the computer program product is run on a computer, the computer is enabled to perform the technical solution according to any one of the first aspect and the possible implementations of the first aspect.

It may be understood that the solutions according to the second aspect to the fifth aspect provided in this application may separately correspond to any one of the first aspect and the possible designs of the first aspect. Therefore, beneficial effects that can be achieved are similar, and details are not described herein again.

### DESCRIPTION OF DRAWINGS

FIG. 1 is a schematic diagram of a communication scenario;
FIG. 2 is a schematic interaction diagram of successfully re-accessing an LTE network;
FIG. 3 is a schematic interaction diagram of failing to re-access an LTE network;
FIG. 4 is a schematic interaction diagram of access to a WCDMA network;
FIG. 5 is a schematic interaction diagram of registration in a CS domain in a WCDMA network;
FIG. 6 is a schematic interaction diagram of registration in a PS domain in a WCDMA network;
FIG. 7 is a schematic diagram of a time sequence for attempting to register in a PS domain for a plurality of times;
FIG. 8 is a schematic interaction flowchart of a communication control method according to an embodiment of this application;
FIG. 9A and FIG. 9B are a schematic interaction flowchart of a communication control method according to an embodiment of this application;
FIG. 10 is a schematic interaction flowchart of a communication control method according to an embodiment of this application;
FIG. 11 is a schematic composition diagram of an electronic device according to an embodiment of this application; and
FIG. 12 is a schematic composition diagram of a chip system according to an embodiment of this application.

### DESCRIPTION OF EMBODIMENTS

In the following, the terms "first" and "second" are merely intended for a purpose of description, and shall not be understood as indicating or implying relative importance or implying a quantity of indicated technical features. Therefore, a feature defined by "first" or "second" may explicitly or implicitly include one or more features. In descriptions of embodiments, unless otherwise specified, "a plurality of" means two or more.

For user equipment (User equipment, UE) that supports 4G or 5G, it is generally configured to preferentially camp on a network of a higher standard to provide a communication service for a user. For example, networks of high to low standards are 6G, 5G, 4G, 3G, and the like.

The 5G network may also be referred to as a new radio (NR) network, the 4G network may also be referred to as an LTE network, and the 3G network may include a CDMA network, a TDSCDMA network, a WCDMA network, or the like. In this application, an example in which the 3G network is a WCDMA network is used.

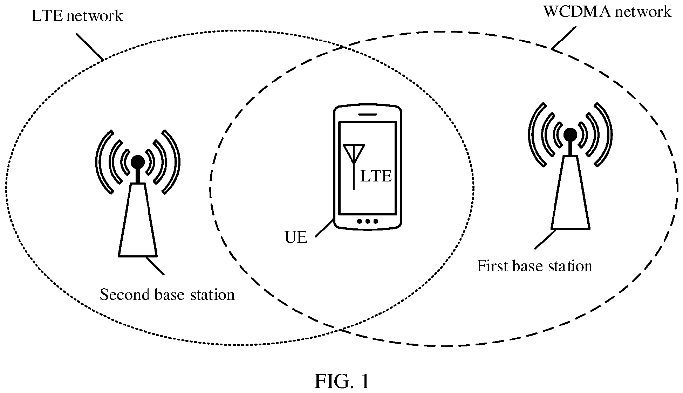

FIG. 1 is an example of a scenario. In the following descriptions, the scenario shown in FIG. 1 is used as an example, to describe occurrence of the technical problem and the solution provided in embodiments of this application.

As shown in FIG. 1, a current location of UE may be within coverage of an LTE network and a WCDMA network. A radio access network device corresponding to the WCDMA network may include a first base station, and a radio access network device corresponding to the LTE network may include a second base station.

The UE may preferentially camps on the LTE network for communication.

In some cases, the UE may be disconnected from the LTE network due to a temporary network fault or another reason. Correspondingly, the UE may attempt to reestablish an LTE network connection to the second base station through an RRC connection reestablishment (RRC Connection Reestablishment) procedure.

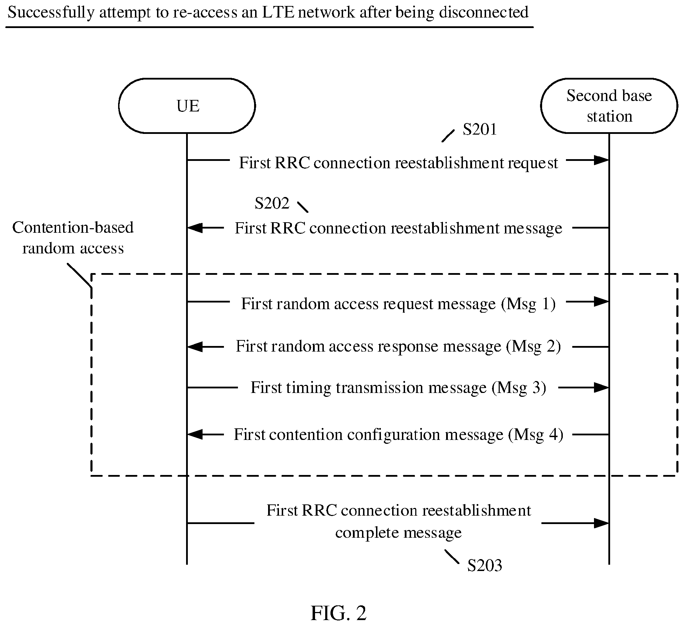

For example, FIG. 2 shows an interaction example in which the UE performs RRC connection reestablishment with the second base station. Successful RRC connection reestablishment is used as an example.

As shown in FIG. 2, the procedure may include the following steps.

S201: The UE sends a first RRC connection reestablishment request to the second base station.

For example, the first RRC connection reestablishment request may include information about RRC Connection Reestablishment Request. Optionally, the first RRC connection reestablishment request may carry a field indicating an LTE network standard.

Optionally, the first RRC connection reestablishment request may include information about RRC Connection Rejection Request.

S202: The second base station sends a first RRC connection reestablishment message to the UE.

For example, the first RRC connection reestablishment message may include information about RRC Connection Reestablishment.

Based on S201 and S202, the UE may attempt to re-access the LTE network corresponding to the second base station through a random access (Random Access) procedure.

The random access procedure may include non-contention-based random access or contention-based random access.

Non-contention-based random access is used as an example.

This procedure may include the following steps.

The UE sends a first random access request message to the second base station. Optionally, the first random access request message may include information about RandomAccessPreamble. In some implementations, the first random access request message may also be referred to as a message 1, a message 1, or a Msg 1.

The second base station sends a first random access response message to the UE. Optionally, the first random access response message may include information about RandomAccessResponse. The first random access response message may also be referred to as a message 2, a message 2, or a Msg 2.

In a case in which the UE receives the Msg 2 for indicating that random access succeeds, it corresponds to that current random access succeeds.

Contention-based random access is used as an example.

As shown in FIG. 2, the procedure may include the following steps.

The UE sends a first random access request message (for example, a Msg 1) to the second base station.

The second base station sends a first random access response message (for example, a Msg 2) to the UE.

The UE sends a first timing transmission message to the second base station. Optionally, the first timing transmission message may include information about Scheduled Transmission Containing C-RNTI MAC Ce or CCCH SDU. The first timing transmission message may also be referred to as a message 3, a message 3, or a Msg 3.

The second base station sends a first contention configuration message to the UE. Optionally, the first contention configuration message may include information about Contention Resolution. The first contention configuration message may also be referred to as a message 4, a message 4, or a Msg 4.

In a case in which the UE receives the Msg 4 for indicating that random access succeeds, it corresponds to that current random access succeeds.

In the following example, contention-based random access is used as an example.

In a case in which the UE acknowledges that the random access succeeds (that is, receives the Msg 2), the UE may perform S203.

S203: The UE sends a first RRC connection reestablishment complete message to the second base station.

For example, the first RRC connection reestablishment complete message may include information about RRC Connection Reestablishment Complete.

Therefore, through S201 to S203, the UE can complete re-access to the LTE network.

In some other cases, the UE may not be able to re-access the LTE network through the random access procedure.

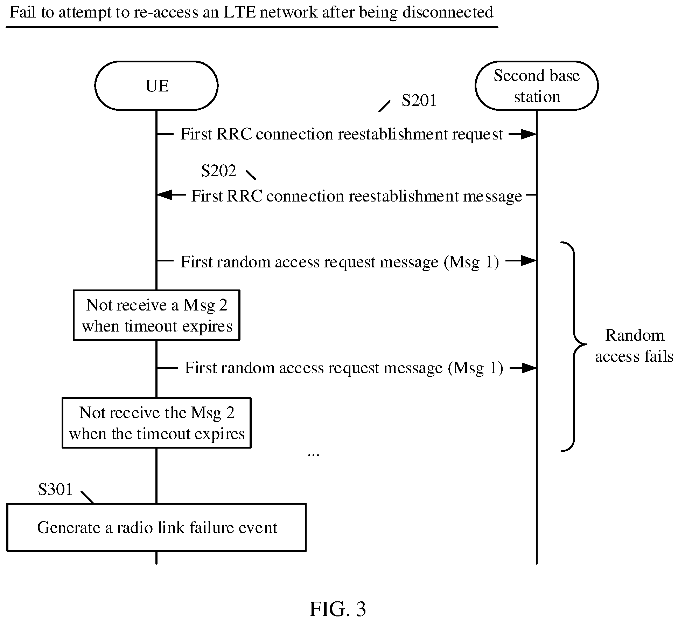

For example, refer to FIG. 3. The UE and the second base station may separately initiate the random access procedure through S201 and S202.

In this example, after the UE sends the Msg 1 to the second base station, the UE does not receive the Msg 2 fed back by the second base station. Optionally, after sending the Msg 1 to the second base station, the UE may start a corresponding timer to start timing. Before the timer times out, if no Msg 2 is received, it corresponds to that the UE does not receive the Msg 2 fed back by the second base station.

In some other embodiments, as shown in FIG. 3, the UE may repeatedly initiate the random access procedure to the second base station without receiving the Msg 2 fed back by the second base station. For example, the UE may send the Msg 1 to the second base station again. This is repeated until a quantity of attempts of the UE reaches a corresponding quantity threshold (for example, 10 times), and the UE still does not receive the Msg 2 fed back by the second base station. Therefore, it corresponds to that random access to the LTE network fails.

In this way, the UE may perform S301.

S301: The UE generates a radio link failure event.

For example, the radio link failure event may include information about Radio Link Failure. Optionally, the radio link failure event may include information about the LTE network corresponding to the second base station. Therefore, it indicates a radio link failure of the LTE network.

An example in which a call manager (Call Manager, CM) module and a multimode call processor (Multimode Call Processor, MMCP) module are configured in the UE is used.

The CM module of the UE may generate the radio link failure event, and the CM module may report the radio link failure event to the MMCP module, so that the MMCP module controls the UE to perform fallback indicated by the network, and attempts to perform network access to the 3G network.

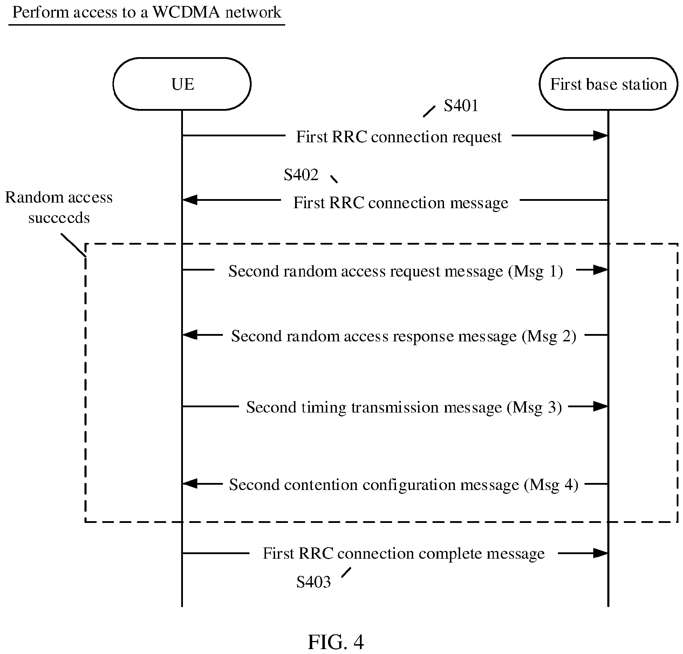

FIG. 4 shows an example of interaction between UE and a first base station corresponding to a WCDMA network. The solution shown in FIG. 4 is implemented, so that the UE can implement access to the WCDMA network.

As shown in FIG. 4, the process may include the following steps.

S401: The UE sends a first RRC connection request to the first base station.

For example, the second RRC connection request may include information about RRC Connection Setup Request. Optionally, the second RRC connection request may carry a field indicating an WCDM network standard.

The first RRC connection request is used by the UE to initiate a connection of the WCDMA network to the network.

S402: The first base station sends a first RRC connection message to the UE.

For example, the first RRC connection message may include information about RRC Connection Setup.

Based on S401 and S402, the UE may attempt, through a random access procedure, to access the WCDMA network corresponding to the first base station.

It may be understood that for the random access procedure, reference may be made to the foregoing related descriptions in FIG. 2.

For example, the random access procedure may be non-contention-based random access or contention-based random access.

In this example, an example in which random access to the WCDMA network is implemented through contention-based random access is used.

As shown in FIG. 4, the UE may send a second random access request message (for example, a Msg 1) to the first base station. Correspondingly, the first base station may send a second random access response message (for example, a Msg 2) to the UE. The UE may also send a second timing transmission message (for example, a Msg 3) to the first base station. Correspondingly, the first base station may send a second contention configuration message (for example, a Msg 4) to the UE.

Therefore, based on reception of the Msg 4, the UE can implement random access to the WCDMA network through random access.

S403: The UE sends a first RRC connection complete message to the first base station. Optionally, the first RRC connection complete message may include information about RRC Connection Setup Complete.

Therefore, after sending the first RRC connection complete message, the UE can complete access to a 3G network (for example, the WCDMA network) of the first base station.

After the UE accesses and camps on WCDMA, the UE may register various related information with a core network device (for example, a first core network device) in the WCDMA network based on an RRC connection to the first base station, to establish communication with the core network device in the WCDMA network. In an embodiment of this application, the first core network device may include a mobility management entity (Mobility Management Entity, MME) in the WCDMA network.

For example, the UE may register in a circuit switched (Circuit Switched, CS) domain and a packet switched (Packet Switch, PS) domain in the first core network device based on the RRC connection to the first base station.

The CS domain may be used for a voice call in a 2G/3G network. The PS domain may be used to perform a data communication service. In some cases, an IP multimedia subsystem (IMS) may be configured in the PS domain, so that the PS domain can provide a voice call service and a data service based on the IMS.

In this application, an example in which both the CS domain and the PS domain can provide voice call services is used.

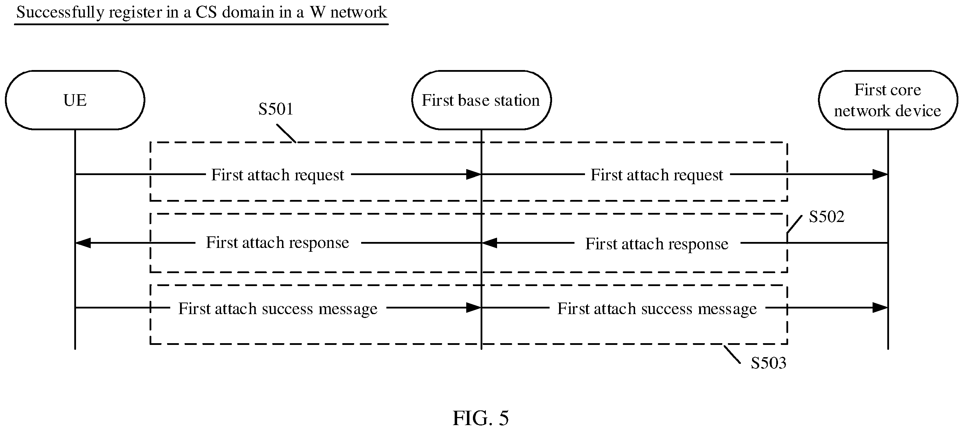

In an example, FIG. 5 shows an example of an interaction procedure in which UE registers in a CS domain in a first core network device through a first base station. After registration in the CS domain succeeds, the UE may make a voice call in a WCDMA network through the CS domain.

As shown in FIG. 5, the registration procedure in the CS domain may include the following steps.

S501: The UE sends a first attach request to the first base station, and the first base station sends the first attach request to the first core network device.

In this example, the UE may send the first attach request to the first core network device through transparent transmission of the first base station.

For example, the first attach request may include information about AttchRequest.

In some embodiments, the first attach request may include a network standard identifier corresponding to WCDMA and a related identifier of the CS domain. Therefore, the first core network device determines, based on the first attach request, that the UE is performing registration in the CS domain in the WCDMA network.

For example, the first attach request may include information about WCDMA Attach request: att_type=1, where att_type=1 is used to indicate an international mobile equipment identity (International Mobile Equipment Identity, IMSI) corresponding to the CS domain. In this embodiment of this application, att_type=1 may also be referred to as a first registration identifier.

In this example, the first attach request may carry an identity of the UE. For example, the identity of the UE may include a user ID of the UE.

S502: The first core network device sends a first attach response to the first base station, and the first base station sends the first attach response to the UE.

Similar to the descriptions in S501, the first base station may be configured to perform transparent transmission of the first attach response.

For example, the first attach response may include information about AttchAccept.

The first core network device may perform user authentication based on the identity of the UE carried in the first attach request. In a case in which the user authentication succeeds, the first core network device acknowledges that the UE may perform CS registration. In this way, the first core network device may send the first attach response to the UE through the first base station.

S503: The UE sends a first attach success message to the first base station, and the first base station sends the first attach success message to the first core network device.

For example, the first attach success message may include information about AttchComplete.

In this way, through S501 to S503, the UE can implement registration in the CS domain in the WCDMA network.

In some implementations, the UE may further register in a PS domain in the WCDMA network.

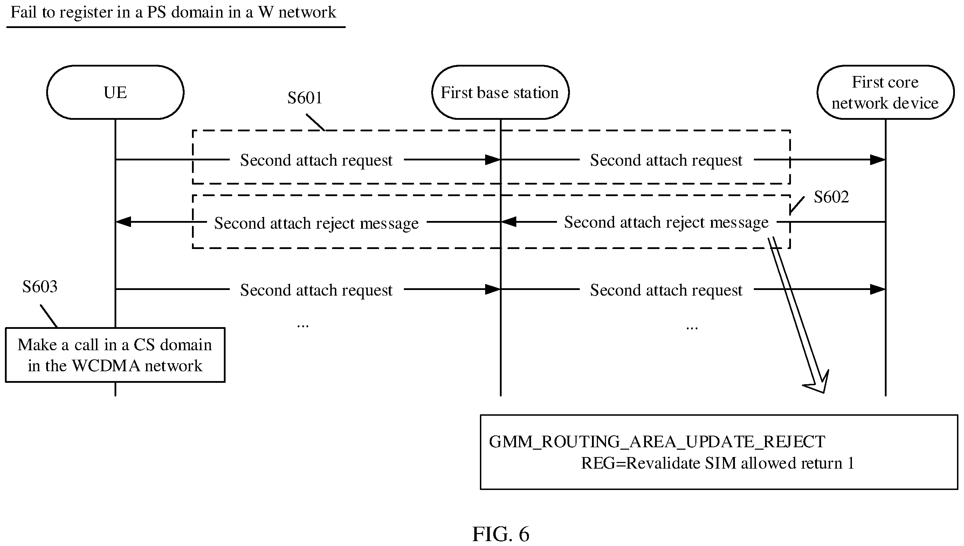

In an implementation, FIG. 6 shows an interaction example in which UE registers in a PS domain in a first core network device after successfully registering in a CS domain. Similar to the process of registering in the CS domain, in the process of registering in the PS domain, information of interaction between the UE and the first core network device may be transferred through transparent transmission of a first base station.

As shown in FIG. 6, the procedure may include the following steps.

S601: The UE sends a second attach request to the first base station, and the first base station sends the second attach request to the first core network device.

For example, the second attach request may include information about AttchRequest.

With reference to the descriptions of the first attach request in S501, in this example, the second attach request may include a network standard identifier corresponding to WCDMA. The second attach request may further include a related identifier of the PS domain.

For example, the second attach request may include information about WCDMAAttach request: att_type=0, where att_type=0 may be used to indicate an evolved packet system (Evolved Packet System, EPS) corresponding to the PS domain. In this embodiment of this application, att_type=0 may also be referred to as a second registration identifier.

In some embodiments, the second attach request may carry an identity of the UE. For example, the identity of the UE may include a user ID of the UE.

S602: The first core network device sends a second attach reject message to the first base station, and the first base station sends the second attach reject message to the UE.

For example, the second attach reject message may include information about AttachReject.

Optionally, the second attach reject message may further include information about #7 GMM_Routing_Area_Update_Reject. In some implementations, the #7 message may further include a GPRS not allowed field.

The first core network device may perform user authentication based on the identity of the UE carried in the first attach request.

In some cases, the first core network device fails to perform user authentication on the UE. In this way, the first core network device may send the second attach reject message to the UE.

In some embodiments, the UE may configure SIM_STATE as 1 in a case in which the UE receives the second attach reject message, where SIM is a subscriber identity module, and is an abbreviation of the subscriber identification module.

In this example, SIM_STATE is configured as 1, which corresponds to a rejection of the current network for registration in the PS domain. In this way, SIM_STATE is configured as 1, so that the UE can make a call in the current network without using the PS domain. In some implementations, the UE may configure the currently registered SIM card as Revalidate in a case in which the UE determines that the PS domain is unavailable. For example, an MMCP module in the UE may configure the current SIM card as Revalidate SIM allowed return value 1.

In some embodiments, the UE may attempt to perform registration in the PS domain again after receiving the second attach reject message. For example, the UE may repeatedly perform S601 to S603. In this way, in a case in which a plurality of times of attempting to register in the PS domain all fail, the UE may determine that the PS domain in the current network is unavailable.

Optionally, the UE may start a first counter after receiving the second attach reject message for the first time, and an initial value of the first counter may be configured as 1. Thereafter, each time S601 to S603 are performed, when the second attach reject message is received again, the first counter is increased by 1.

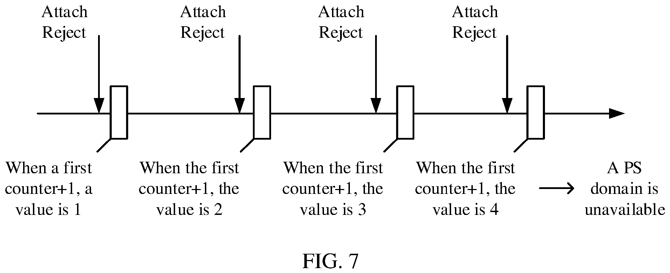

An example in which the UE repeatedly attempts to perform registration in the PS domain for four times is used. As shown in FIG. 7, the UE may repeatedly perform operations of S601 to S603 for four times. In a case in which the second attach reject message is received for the fourth time (for example, Attach Reject is received for the fourth time), the value of the first counter is changed to 4.

The UE may determine, based on the value 4 of the first counter, that the current PS domain is unavailable, and perform S603.

It may be understood that an example in which the value of the first counter in FIG. 7 is 4, and the UE determines that the PS domain is unavailable is used. In some other implementations, the value (for example, 4) that is for triggering the UE to determine that the PS domain is unavailable may alternatively be replaced by another positive integer.

S603: The UE makes a call in the CS domain in the WCDMA network.

In this way, the UE can use the CS domain in WCDMA to make a call because registration in the CS domain succeeds and registration in the PS domain fails.

In an actual implementation process, the UE camps on WCDAM for long time and provides a voice call service through the CS domain. However, because registration in the PS domain fails, the UE cannot provide a data service in the WCDMA network. That is, after the UE is handed over from the LTE network to the 3G network such as the WCDMA network, in a case in which registration in the CS domain succeeds and registration in the PS domain fails, a problem that the UE cannot access the Internet may occur. In addition, because registration in the PS domain in the WCDMA network fails, the UE marks the SIM card as Revalidate, which corresponds to that the current SIM card does not have a PS domain capability. In the LTE network or the NR network, generally, registration in the CS domain and registration in the PS domain are jointly performed. Therefore, because the current SIM card is marked as not having the PS domain capability, the UE does not perform registration in the LTE network or the NR network. This causes the UE to camp on the 3G network for long time.

Generally, the user can indicate the UE to search the network again by inputting an operation of turning on an airplane mode/turning off an airplane mode on the UE. Correspondingly, after receiving an operation of canceling the airplane mode, the UE can reset an identifier of the SIM card, for example, reset SIM_STATE to 0, remove a Revalidate identifier of the SIM card, and the like. Therefore, the UE can re-search and re-camp on networks of various standards (for example, the LTE network or the NR network). However, in a case in which the UE does not turn on the airplane mode/turn off the airplane mode according to an indication of the user, the UE always camps on the 3G network (for example, the WCDMA network). Even if the UE is currently in a location with a service in a network of a higher standard (for example, LTE or NR), the UE does not actively change to camp on the network of the higher standard.

To resolve the foregoing problem, embodiments of this application provide a communication control method, so that in a case in which UE is handed over from a network of a higher standard (for example, LTE or NR) to a 3G network (for example, a WCDMA network), registration in a CS domain succeeds, and registration in a PS domain fails, the UE may autonomously re-camp on the network of the higher standard without turning on an airplane mode/turning off an airplane mode, thereby providing a better communication service for a user.

It should be noted that the UE related in embodiments of this application may also be referred to as an electronic device. The electronic device may include at least one of a mobile phone, a foldable electronic device, a tablet computer, a desktop computer, a laptop computer, a handheld computer, a notebook computer, an ultra-mobile personal computer (ultra-mobile personal computer, UMPC), a netbook, a cellular phone, a personal digital assistant (personal digital assistant, PDA), an augmented reality (augmented reality, AR) device, a virtual reality (virtual reality, VR) device, an artificial intelligence (artificial intelligence, AI) device, a wearable device, a vehicle-mounted device, a smart home device, or a smart city device. A specific type of the electronic device is not specially limited in embodiments of this application.

In an example, the electronic device may include a processor, an external memory interface, an internal memory, a universal serial bus (universal serial bus, USB) interface, a charging management module, a power management module, a battery, an antenna 1, an antenna 2, a mobile communication module, a wireless communication module, an audio module, a speaker, a receiver, a microphone, a headset jack, a sensor module, a button, a motor, an indicator, a camera module, a display, a SIM card interface, and the like. The sensor module may include a pressure sensor, a gyroscope sensor, a barometric pressure sensor, a magnetic sensor, an acceleration sensor, a distance sensor, an optical proximity sensor, a fingerprint sensor, a temperature sensor, a touch sensor, an ambient light sensor, a bone conduction sensor, and the like.

The processor may include one or more processing units. For example, the processor may include an application processor (application processor, AP), a modem processor (Modem), a graphics processing unit (graphics processing unit, GPU), an image signal processor (image signal processor, ISP), a controller, a video codec, a digital signal processor (digital signal processor, DSP), a baseband processor (baseband processor, BP or BBP), a neural-network processing unit (neural-network processing unit, NPU), and/or the like. Different processing units may be independent devices, or may be integrated into one or more processors.

In embodiments of this application, the foregoing MMCP module and the CM module may be configured in a baseband processor.

The processor may generate an operation control signal based on an instruction operation code and a time sequence signal, to complete control on instruction fetching and execution.

A memory may be further disposed in the processor, and is configured to store instructions and data. In some embodiments, the memory in the processor may be a cache. The memory may store instructions or data that has been used by the processor or that is used at a high frequency. If the processor needs to use the instructions or the data, the processor may directly invoke the instructions or the data from the memory. This avoids repeated access, and reduces waiting time of the processor, thereby improving system efficiency.

In some embodiments, the processor may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like. The processor may be connected to modules such as a touch sensor, an audio module, a wireless communication module, a display, and a camera through at least one type of the foregoing interfaces.

It may be understood that an interface connection relationship between the modules illustrated in embodiments of this application is merely an example for description, and does not constitute a limitation on the structure of the electronic device. In some other embodiments of this application, the electronic device may alternatively use an interface connection manner different from that in the foregoing embodiments, or a combination of a plurality of interface connection manners.

In some embodiments, a wireless communication function of the electronic device may be implemented through the antenna 1, the antenna 2, the mobile communication module, the wireless communication module, the modem processor, the baseband processor, and the like.

The antenna 1 and the antenna 2 are configured to transmit and receive electromagnetic wave signals. Each antenna in the electronic device may be configured to cover a single communication frequency band or a plurality of communication frequency bands. Different antennas may also be multiplexed, to improve utilization of the antennas. For example, the antenna 1 may be multiplexed as a diversity antenna of a wireless local area network. In some other embodiments, the antenna may be used in combination with a tuning switch.

The mobile communication module may provide a solution for wireless communication such as 2G/3G/4G/5G/6G applied to the electronic device. The mobile communication module may include at least one filter, a switch, a power amplifier, a low noise amplifier (low noise amplifier, LNA), and the like. The mobile communication module may receive an electromagnetic wave through the antenna 1, perform processing such as filtering or amplification on the received electromagnetic wave, and transmit a processed electromagnetic wave to the modem processor for demodulation. The mobile communication module may further amplify a signal modulated by the modem processor, and convert the signal into an electromagnetic wave for radiation through the antenna 1. In some embodiments, at least some functional modules of the mobile communications module may be disposed in the processor. In some embodiments, at least some functional modules of the mobile communication module may be disposed in a same component as at least some modules of the processor.

The modem processor may include a modulator and a demodulator. The modulator is configured to modulate a to-be-sent low-frequency baseband signal into a medium-high frequency signal. The demodulator is configured to demodulate a received electromagnetic wave signal into a low-frequency baseband signal. Then, the demodulator transmits, to the baseband processor for processing, the low-frequency baseband signal obtained through demodulation. The low-frequency baseband signal is processed by the baseband processor and then transmitted to the application processor. The application processor outputs a sound signal through the audio device (which is not limited to the speaker, the receiver, and the like), or displays an image or a video through the display. In some embodiments, the modem processor may be an independent component. In some other embodiments, the modem processor may be independent of the processor and disposed in a same component as the mobile communication module or another functional module.

It should be noted that the structure shown in embodiments of this application does not constitute a specific limitation on the electronic device. In some other embodiments in this application, the electronic device may include more or fewer components, or some components may be combined, or some components may be split, or a different component deployment may be used. The foregoing components may be implemented by using hardware, software, or a combination of software and hardware.

The communication control method provided in embodiments of this application may be applied to the electronic device provided in the foregoing embodiments. In the following descriptions, that the electronic device is UE is still used as an example.

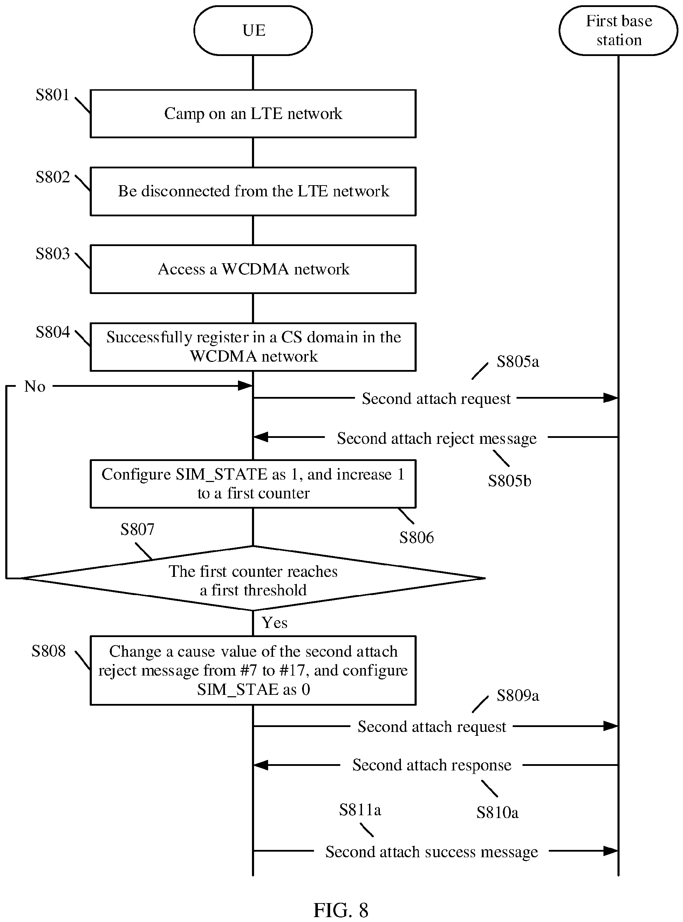

FIG. 8 is a schematic flowchart of a communication control method according to an embodiment of this application. In this example, that a location of UE corresponds to the location shown in FIG. 1 is used as an example. That is, a current location of the UE is within coverage of an LTE network and a WCDMA network. Correspondingly, the UE may search for a signal of the LTE network to access the LTE network, and/or the UE may search for a signal of the WCDMA network to access the WCDAM network.

As shown in FIG. 8, the solution may include the following steps.

S801: The UE camps on the LTE network.

The UE may camp on a network of a higher standard. For example, the network of the higher standard may include an LTE network, an NR network, a 6G network, or the like.

In this example, that the UE camps on the LTE network is used as an example.

S802: The UE is disconnected from the LTE network.

For example, in a case in which the UE moves in a location or the like, communication quality with a currently accessed network may change. In a case in which communication quality of a currently accessed LTE network is poor, the UE may be disconnected from the LTE network.

In this application, that the UE is disconnected from the LTE network may include: The UE is disconnected from a second base station corresponding to the LTE network. For example, the connection may include an RRC connection between the UE and the second base station.

Optionally, after being disconnected from the LTE network, the UE may attempt, based on the implementation shown in FIG. 2 or FIG. 3, to re-access the LTE network corresponding to the second base station.

For example, refer to FIG. 3. The UE may send RRC Connection Reestablishment Request to the second base station, and the second base station may send RRC Connection Reestablishment to the UE. Then, the UE may initiate contention-based/non-contention-based random access to the second base station, and attempt to re-camp on the LTE network through random access by transferring messages such as a Msg 1 and a Msg 2.

That the UE does not receive the Msg 2 after sending the Msg 1 when timeout expires is used as an example. Correspondingly, the UE may fail to randomly access the LTE network based on the failure to receive the Msg 2 when the timeout expires.

Optionally, after the UE does not receive the Msg 2 when the timeout expires, the UE may repeatedly initiate random access for a plurality of times. For example, the UE may send the Msg 1 to the second base station for the second time after the UE does not receive the Msg 2 for the first time when the timeout expires. Correspondingly, after the UE does not receive the Msg 2 again, the UE may further continue to send the Msg 1 repeatedly. This is repeated until a quantity of times that the Msg 2 is not received when the timeout expires reaches a corresponding quantity threshold. Therefore, the UE determines that the UE cannot re-access the LTE network.

Then, the UE may perform S803.

S803: The UE accesses the WCDMA network.

It may be understood that, after determining that the UE cannot access the LTE network again, the UE may attempt to access a network of a lower standard, to provide a basic voice call/data service through the network of the lower standard.

Corresponding to the network of the higher standard, the network of the lower standard may include a 3G network, a 2G network, or the like.

In this application, an example in which the UE accesses the WCDMA network in 3G after the UE cannot access the LTE network again is used.

In an implementation, the UE may access, based on the solution shown in FIG. 4, the WCDMA network corresponding to a first base station.

For example, the UE may send RRC Connection Setup Request to the first base station. Correspondingly, the first base station sends RRC Connection Setup to the UE. The UE may initiate random access to the WCDMA network to the first base station, to attempt to access the WCDMA network corresponding to the first base station.

Optionally, the UE may implement access to the WCDMA network through random access to the WCDMA network. For specific implementation, refer to the descriptions in FIG. 4. Details are not described herein again.

In this application, that the UE accesses the WCDMA network may include: The UE establishes a communication connection to the first base station corresponding to the WCDMA network. For example, the communication connection may include an RRC connection between the UE and the first base station.

Thereafter, the UE may register in a CS domain and a PS domain in a first core network device corresponding to the WCDMA network (for example, an MME in the WCDMA network) based on the access to the WCDMA network.

S804: The UE successfully registers in the CS domain in the WCDMA network.

For example, the UE may register in the CS domain based on the WCDMA network to the first core network device through the first base station.

With reference to the descriptions in FIG. 5, the UE may send AttchRequest to the first base station. AttchRequest may include information about WCDMA Attach request: att_type=1. In this way, through AttchRequest, the UE may initiate registration in the CS domain to the first core network, and AttchRequest may further carry a user ID of the UE.

The first core network device may perform authentication check on the user ID of the UE based on AttchRequest. In a case in which the check succeeds, the first core network device may send AttchAccept to the UE through the first base station. Therefore, the UE may successfully register in the CS domain in WCDMA based on the received AttchAccept. For specific implementation of the process, refer to the descriptions in FIG. 5.

Thereafter, the UE may further register in the PS domain in the WCDMA network.

S805a: The UE sends a second attach request to the first base station.

For example, with reference to the descriptions in FIG. 6, the second attach request may include information about AttchRequest. The second attach request may include information about WCDMA Attach request: att_type=0 and a user ID of the UE.

With reference to the descriptions in FIG. 6, the process of registering in the PS domain may be implemented based on interaction between the UE, the first base station, and the first core network device. The first base station is configured to transparently transmit a message from the UE to the first core network device, or transparently transmit a message from the first core network device to the UE. In this way, in S805, after receiving the second attach request, the first base station may send the second attach request to the first core network device.

S805b: The first base station sends a second attach reject message to the UE.

The second attach reject message may be sent by the first core network device to the first base station. The first base station may transparently transmit the second attach reject message from the first core network device to the UE.

For example, the second attach reject message may include information about AttachReject.

In some embodiments, the second attach reject message may include a GPRS not allowed field. The second attach reject message may further carry a reject cause value including information about #7 GMM_Routing_Area_Update_Reject or information about RAU. Optionally, the second attach reject message may also be referred to as a #7 message.

In this way, the UE may determine, based on the received second attach reject message, that registration in the PS domain fails this time.

S806: Configure SIM_STATE as 1, and increase 1 to the first counter.

The UE may configure SIM_STATE as 1 based on the received second attach reject message, to indicate that a SIM card that currently performs registration in the PS domain cannot provide a PS domain service. For example, the PS domain service may include a voice call service or a data service based on the PS domain.

In some embodiments, the UE may attempt to register in the PS domain for a plurality of times, to avoid a failure to register in the PS domain due to a temporary fault such as a communication abnormality.

For example, the UE may start a first counter. The first counter may be configured to record a quantity of times of receiving the #7 message.

For example, in a case in which the UE first receives the #7 message, the UE start the first counter, and a value of the first counter is 1.

S807: The UE determines that the first counter reaches a first threshold.

For example, in a case in which the UE determines that the first counter reaches the first threshold, the UE performs S808 below. For example, the first threshold may be 4, or the first threshold may be any other positive integer.

In this way, in a case in which the first counter reaches the first threshold, it indicates that the UE still cannot complete registration in the PS domain after repeated attempts of a preset quantity (for example, four times).

Correspondingly, in a case in which the first counter does not reach the first threshold, the UE returns to perform S805a, S805b, and S806. Therefore, the UE continues to attempt to register in the PS domain in the WCDMA network.

S808: The UE changes the cause value of the second attach reject message from #7 to #17, and configures SIM_STAE as 0.

With reference to the descriptions of S805b, the attach reject cause value corresponding to the #7 message includes GMM_Routing_Area_Update_Reject. Therefore, a quantity of times of repeatedly registering in the PS domain corresponding to the first counter may be triggered.

In this example, after the UE completes the quantity of times of repeatedly registering in the PS domain corresponding to the first threshold corresponding to the first counter, in a case in which the UE still does not complete registration in the PS domain, the UE changes the cause value from #7 to #17.

A message whose cause value is #17 may also be referred to as a #17 message. A corresponding attach reject cause value of the #17 message includes information about Tracing Area Update Reject or information about TAU.

In addition, the UE may also configure SIM_STAE as 0.

In this way, the UE can perform corresponding processing on the #17 message in a case in which SIM_STAE is 0, for example, perform S809a and S810a.

S809a: The UE sends a second attach request to the first base station.

S810a: The first base station sends a second attach response to the UE.

For example, the second attach request in S809a may be the same as the second attach request in S805a. For example, the second attach request in S809a may include information about WCDMA Attach request: att_type=0 and a user ID of the UE.

In this way, #7 is changed to #17 in S808, so that the UE can attempt to register in the PS domain in the WCDMA network again.

In this example, the first core network device may determine, based on the second attach request, that the UE may register in the PS domain in the WCDMA network. Therefore, the first core network device may send the second attach response to the UE through the first base station. For example, the second attach response may include information about AttchAccept.

In this way, the UE may perform S811a, that is, send a second attach success message to the first base station. For example, the second attach success message may include information about Attach Complete.

Therefore, the UE can successfully register in the PS domain and the CS domain in the WCDMA network, so that the UE can provide a voice call service and a data service for the user on a basis that the UE has registered in the CS domain and the PS domain in the WCDMA network.

In some other embodiments of this application, after S808 is performed, in a process in which the UE attempts to register in the PS domain in the WCDMA network again, a case in which registration in the PS domain fails may also occur.

Correspondingly, an embodiment of this application further provides a communication control method. According to this solution, the UE can attempt to re-access a network with a higher standard (for example, an LTE network) in a case in which registration in the PS domain in the WCDMA network fails, so that the UE can provide a voice call service and a data service for the user through the LTE network without requiring the user to indicate to turn on an airplane mode/turn off an airplane mode.

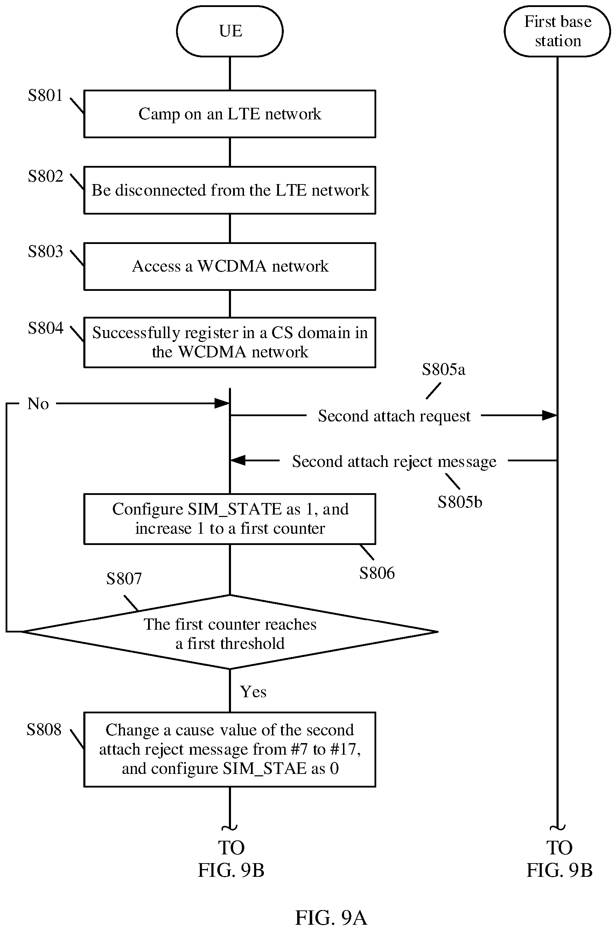

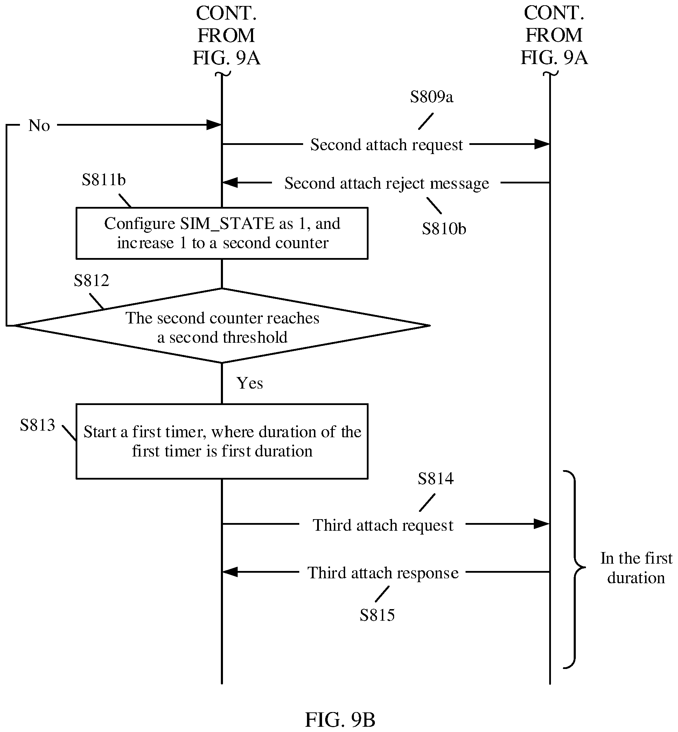

For example, refer to FIG. 9A and FIG. 9B. In this example, for execution of S801 to S809a, refer to the descriptions in FIG. 8. As shown in FIG. 9A and FIG. 9B, after S809a, the solution may include the following steps.

S810b: The first base station sends a second attach reject message to the UE. For example, the second attach reject message may include information about AttachReject.

S811b: The UE configures SIM_STATE as 1, and increases 1 to the second counter.

S812: The UE determines that the second counter reaches a second threshold.

For example, in a case in which a value of the second counter reaches the second threshold (for example, five times), the UE performs S813 below. Correspondingly, if the value of the second counter does not reach the second threshold, the UE returns to perform S809a.

For execution of S809a to S812, refer to execution of S805a to S807 above. For example, each time a second attach reject message is received, the UE may perform an operation of increasing 1 to the second counter, and attempt to perform registration in the PS domain herein. This is repeated until the value of the second counter reaches the second threshold.

It should be noted that, in the example shown in FIG. 9A and FIG. 9B, S808 is performed to trigger a response to the #17 message, that is, S809a to S812 are performed. In S810b, the second attach reject message received by the UE may still include the #7 message. In this case, in some embodiments of this application, the UE may directly perform S811b each time after receiving the #7 message corresponding to S810b. In some other embodiments, the UE may modify the cause value of the #7 message to #17 each time after receiving the second attach reject message including the #7 message. Then, the UE may continue to perform S811b.

It may be understood that the #7 message is changed to a #17 message, so that the UE may attempt to register in the PS domain in the WCDMA network again. In this way, a probability of successful registration in the PS domain in the WCDMA network can be further improved.

In some embodiments of this application, as shown in FIG. 8, in a case in which registration in the PS domain for a plurality of times (for example, nine times that the first threshold plus the second threshold) includes one time of successful registration, the UE may receive an attach response including AttchAccept before the second counter reaches the second threshold. Therefore, the UE can normally provide a voice call service and a PS domain-based data service for the user in the WCDMA network.

In some other embodiments, in a case in which registration in the PS domain for a plurality of times (for example, a quantity of times that the first threshold plus the second threshold) is not successful, as shown in FIG. 9A and FIG. 9B, the UE may perform S813.

S813: The UE starts a first timer, where duration of the first timer is first duration.

In a timing process of the first timer, the UE may perform S814 and S815. For example, the first timer may be a T3302 timer. The first duration may be preconfigured duration. For example, the first duration may be 12 minutes.

S814: The UE sends a third attach request to the first base station.

S815: The UE receives a third attach response of the first base station.

The first base station may be a base station corresponding to the WCDMA network.

The third attach request may include information about AttchRequest. The third attach request may include a network standard identifier corresponding to LTE. The third attach request may further include related identifiers of the PS domain and the CS domain. For example, the third attach request includes information about LTE Attach request: att_type=2, and att_type=2 may correspond to joint registration in the CS domain and the PS domain in the LTE network. In some implementations, the third attach request may further carry a user ID of the UE. In this embodiment of this application, att_type=2 may also be referred to as a third registration identifier.

The third attach request is used, so that the UE may attempt to return to an LTE network of a high standard, to perform registration in the CS domain and the PS domain.

It should be noted that, in the process of attempting to register in the CS domain and the PS domain in the LTE network, the UE may continue to keep registered in the CS domain in the WCDMA network, so that before successfully registering in the LTE network, the UE may also provide a voice call service by being registered in the CS domain in the WCDMA network. The solution of being registered in the CS domain in the WCDMA network and performing search registration in the LTE network may also be referred to as performing background search in the LTE network.

It may be understood that, in a process of performing background search in the LTE network, the UE is not disconnected from registration in the CS domain in the WCDMA network. Therefore, the UE may send the third attach request through a connection (for example, an RRC connection) established between the UE and the first base station.

Correspondingly, the first base station may send the third attach request to a second core network device corresponding to the LTE network. In some implementations, the first base station may directly send the third attach request to the second core network device. In some other implementations, the first base station may send the third attach request to the second core network device through a second base station in an adjacent LTE network.

In a case in which the second core network device determines, based on the user ID of the UE, that the UE may complete registration in the CS domain and the PS domain in the LTE network, the second core network device may send the third attach response to the UE through the first base station. For example, the third attach response may include information about AttchAccept.

In addition, in the first duration in which the first timer works, the UE may always perform background search in the LTE network, so that the UE continues to attempt to access the LTE network even if the UE fails to attempt to successfully register in the LTE network for the first time or the first several times.

It may be understood that in some other embodiments, in the first duration in which the first timer works, if the UE cannot successfully register in the LTE network, it indicates that a current location of the UE does not support in camping on and accessing to the LTE network. Therefore, the UE can continue to keep registered in the CS domain in the WCDMA network, thereby ensuring a basic voice call capability.

It should be noted that, in this example, the UE performs registration in the CS domain and the PS domain in the LTE network through S814 and S815. In some other embodiments, the LTE network may also be replaced with an NR network or a 6G network.

In this way, in a case in which the UE accesses the WCDMA network, the UE can complete registration in the CS domain and the PS domain in the LTE network. Therefore, the UE can autonomously implement registration in a network of a high standard (for example, the LTE network) without requiring the user to indicate to turn on an airplane mode/turn off an airplane mode, so that the UE can provide a voice call service and/or a data service through the LTE network.

It should be noted that, during implementation of the foregoing solution provided in FIG. 9A and FIG. 9B, after S807, the #7 message is changed to #17 according to the solution provided through S808 to S812, so that the UE may provide, based on a response mechanism of the #17 message, a quantity of times of attempting to register in the PS domain corresponding to the second counter (for example, the second threshold), so that the UE can successfully register in the PS domain in the WCDMA network through more times of attempting to register in the PS domain. In addition, implementation of the solution provided through S813 to S815 is implemented, so that in a case in which the UE fails to register in the PS domain in the WCDMA network, the UE can implement, through background search of the LTE network, an effect that the UE rapidly changes to camp on an LTE network of a higher standard.

In some other embodiments of this application, implementation of the solution provided through S808 to S812 and implementation of the solution provided through S813 to S815 may be used alternatively.

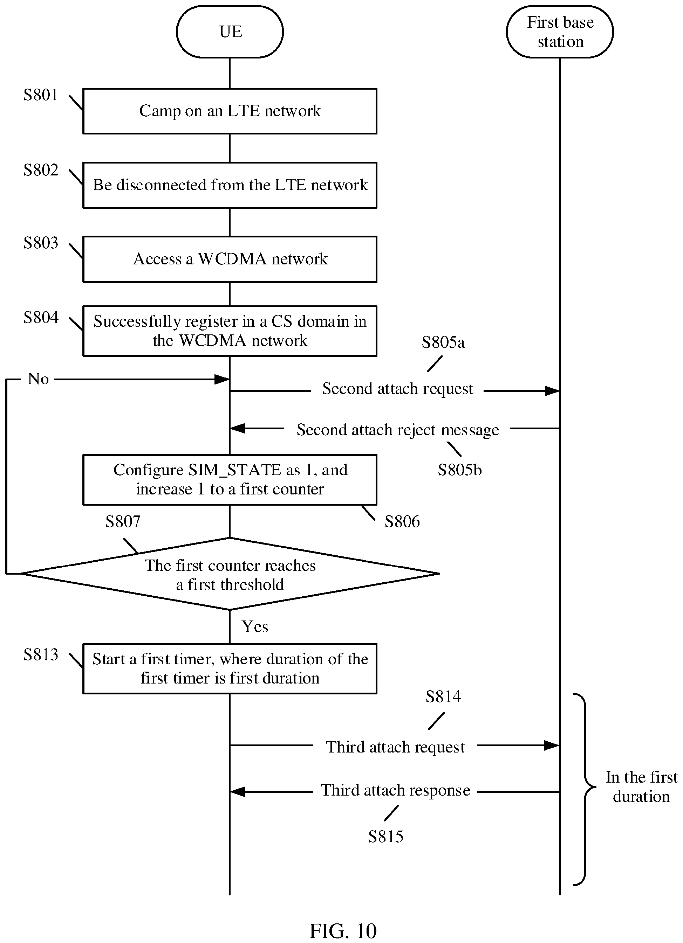

For example, refer to FIG. 10. In a case in which the UE determines that the first timer reaches the first threshold by performing S807, the UE may directly perform S813 to S815 to start the first timer, and attempt to register in a network of a higher standard in the first duration. For an execution step of S813 to S815, refer to the foregoing descriptions. Details are not described again.

The foregoing mainly describes the solutions provided in embodiments of this application from a perspective of each functional module. A person skilled in the art should be easily aware that in combination with the units and algorithm steps of the examples described in embodiments disclosed in this specification, this application can be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

The foregoing integrated module may be implemented in a form of hardware, or may be implemented in a form of a software functional module. It should be noted that, in embodiments of this application, division into the modules is an example, and is merely logical function division. During actual implementation, another division manner may be used.

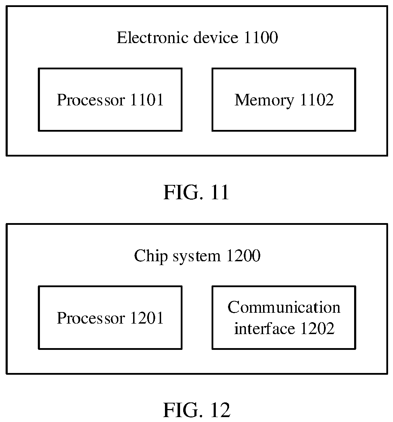

For example, FIG. 11 is a schematic composition diagram of an electronic device 1100. As shown in FIG. 11, the electronic device 1100 may include a processor 1101 and a memory 1102. The memory 1102 is configured to store computer-executable instructions. For example, in some embodiments, when the processor 1101 executes instructions stored in the memory 1102, the electronic device 1100 may perform the method shown in any one of the foregoing embodiments.

It should be noted that all related content of the steps in the foregoing method embodiments may be cited in function descriptions of corresponding functional modules. Details are not described herein again.

FIG. 12 is a schematic composition diagram of a chip system 1200. The chip system 1200 may include a processor 1201 and a communication interface 1202, and is configured to support a related device in implementing the functions in the foregoing embodiments. In a possible design, the chip system further includes a memory, configured to store program instructions and data that are necessary for the electronic device. The chip system may include a chip, or may include a chip and another discrete component. It should be noted that in some implementations of this application, the communication interface 1202 may also be referred to as an interface circuit.

It should be noted that all related content of the steps in the foregoing method embodiments may be cited in function descriptions of corresponding functional modules. Details are not described herein again.

All or some of functions, actions, operations, steps, or the like in the foregoing embodiments may be implemented by software, hardware, firmware, or any combination thereof. When a software program is used to implement the embodiments, the embodiments may be implemented completely or partially in a form of a computer program product. The computer program product includes one or more computer instructions. When the computer program instructions are loaded and executed on a computer, the procedures or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device, for example, a server or a data center, integrating one or more usable media. The usable medium may be a magnetic medium (for example, a soft disk, a hard disk, or a magnetic tape), an optical medium (for example, a DVD), a semiconductor medium (for example, a solid state disk (solid state disk, SSD)), or the like.

Although this application is described with reference to specific features and embodiments thereof, it is clear that various modifications and combinations may be made to this application without departing from the spirit and scope of this application. Correspondingly, the specification and accompanying drawings are merely example descriptions of this application defined by the appended claims, and are considered as any of or all modifications, variations, combinations, or equivalents that cover the scope of this application. It is clear that a person skilled in the art can make various modifications and variations to this application without departing from the spirit and scope of this application. In this way, this application is intended to cover these modifications and variations of this application provided that they fall within the scope of protection defined by the following claims and their equivalent technologies.

## Claims

1. A communication control method, wherein the method is applied to an electronic device, the electronic device camps on a first network, and the method comprises:
being disconnected from the first network, and establishing a connection to a first base station, wherein the first base station corresponds to a second network, and a standard of the second network is different from that of the first network;
sending a first attach request to the first base station, wherein the first attach request comprises a second network identifier and a first registration identifier, the first registration identifier corresponds to a circuit switched CS domain, and the second network identifier corresponds to the second network;
receiving a first attach response, wherein the first attach response comprises information about AttachAccept;
sending a second attach request, wherein the second attach request comprises the second network identifier and a second registration identifier, and the second registration identifier corresponds to a packet switched PS domain;
receiving a second attach reject message, wherein the second attach reject message comprises information about AttachReject;
starting a first timer, wherein working duration of the first timer is first duration; and
sending a third attach request in the first duration in which the first timer works, wherein the third attach request comprises a first network identifier and a third registration identifier, the third registration identifier corresponds to the CS domain and the PS domain, and the first network identifier corresponds to the first network.

2. The method according to claim 1, wherein after the sending a third attach request, the method further comprises:
receiving a third attach response, wherein the third attach response comprises information about AttachAccept.

3. The method according to claim 1 or 2, wherein after the receiving a first attach response, the method further comprises:
configuring to be registered in the CS domain in the second network, so that a voice call is made through the second network.

4. The method according to claim 3, wherein the method further comprises:
in the first duration in which the first timer works, keeping registered in the CS domain in the second network.

5. The method according to claim 1 or 2, wherein after the receiving a second attach reject message, the method further comprises:
configuring a SIM state of a first SIM card as a first value, wherein the first value indicates that the PS domain of the first SIM card is unavailable, the first SIM card is installed in the electronic device, and the first SIM card is a SIM card used by the electronic device when the second attach request is sent.

6. The method according to claim 5, wherein the method further comprises:
starting a first counter, wherein a value of the first counter is increased by 1 in a case in which the second attach reject message is received.

7. The method according to claim 6, wherein in a case in which the value of the first counter is less than a first threshold, the method further comprises:
sending the second attach request again.

8. The method according to claim 6, wherein the starting a first timer comprises:
starting the first timer in a case in which the value of the first counter reaches the first threshold.

9. The method according to claim 1 or 8, wherein a cause value of the second attach reject message comprises information about #7; or
a cause value of the second attach reject message comprises information about #7 and information about GMM_Routing_Area_Update_Reject.

10. The method according to claim 9, wherein before the starting a first timer, the method further comprises:
changing #7 in the cause value of the second attach reject message to #17.

11. The method according to claim 10, wherein the method further comprises:
starting a second counter, and sending the second attach request again, wherein hereafter each time a second attach reject message is received, a value of the second counter is increased by 1.

12. The method according to claim 11, wherein in a case in which the value of the second counter is less than a second threshold, the method further comprises:
sending the second attach request again.

13. The method according to claim 12, wherein the starting a first timer comprises:
starting the first timer in a case in which the value of the second counter reaches the second threshold.

14. The method according to claim 1 or 2, wherein the first attach request comprises information about AttachRequest.

15. The method according to claim 1 or 2, wherein the first registration identifier comprises information about att_type=0, the second registration identifier comprises information about att_type=1, and the third registration identifier comprises information about att_type=2.

16. The method according to claim 1 or 2, wherein the first timer is a T3302 timer, and the first duration is 12 minutes.

17. The method according to claim 1 or 2, wherein the establishing a connection to a first base station comprises:
sending a first RRC connection request, receiving a first RRC connection message, and sending a first RRC connection complete message, wherein
the first RRC connection request comprises information about RRC Connection Setup Request, the first RRC connection message comprises information about RRC Connection Setup, and the first RRC connection complete message comprises information about RRC Connection Setup Complete.

18. The method according to claim 17, wherein before the sending a first RRC connection complete message, the method further comprises:
sending a second random access request message, and receiving a second random access response message; or
sending the second random access request message, receiving the second random access response message, sending a second timing transmission message, and receiving a second contention configuration message, wherein
the second random access request message comprises information about a Msg 1, the second random access response message comprises information about a Msg 2, the second timing transmission message comprises information about a Msg 3, and the second contention configuration message comprises information about a Msg 4.

19. The method according to claim 1 or 2, wherein
the first network is an LTE network or an NR network, and the second network is a WCDMA network.

20. An electronic device, wherein the electronic device comprises a memory and one or more processors, and the memory is coupled to the processor; and
the memory is configured to store a computer program code, and the computer program code comprises computer instructions; and when the processor executes the computer instructions, the electronic device is enabled to perform the method according to any one of claims 1 to 19.

21. A chip system, wherein the chip system is applied to an electronic device; the chip system comprises one or more interface circuits and one or more processors; the interface circuit is interconnected to the processor through a line; the interface circuit is configured to receive a signal from a memory of the electronic device, and send the signal to the processor, wherein the signal comprises computer instructions stored in the memory; and when the processor executes the computer instructions, the electronic device performs the method according to any one of claims 1 to 19.
